# EUROPEAN PATENT APPLICATION

(11) **EP 1 956 802 A2**
(43) Date of publication of application: **13.08.2008**
(21) Application number: 07123972.7
(22) Date of filing: 21.12.2007
(51) Int. Cl.: H04M 1/02

(54) **Hinge mechanism and mobile terminal**

(30) Priority: 08.02.2007 JP 2007029478
(71) Applicant: OMRON CORPORATION, Kyoto-shi, Kyoto 600-8530 (JP)
(72) Inventor: Takamori, Satoshi c/o OMRON CORPORATION, Shimogyo-ku, Kyoto-shi, KYOTO Kyoto 600-8530 (JP); Nishida, Masami c/o OMRON CORPORATION, Shimogyo-ku, Kyoto-shi, KYOTO Kyoto 600-8530 (JP)
(74) Representative: Brykman, Georges

(57) **Abstract**

The invention provides a hinge (10) for semi-automatically opening/closing a sliding cover from a middle position. The hinge mechanism includes: first and second plates (31,71) disposed respectively in first and second casings constituting together a mobile terminal; a slide guide (42) disposed in either one of the first and second plates; a slide fitting portion (72) disposed in the other of the first and second plates, to be slidably moved along the slide guide; and an urging device (5) connected to the first and second plates via first and second connecting portions (51,53) respectively includes: a cam (61) disposed nearer one side in the sliding direction than the first connecting portion; a displacement guide (32) disposed on the second plate allows the second connecting portion to be displaced in a direction crossing the sliding direction; and an abutting portion (58a) disposed at the second connecting portion, to abut against the cam.

## Description

### BACKGROUND OF THE INVENTION

### 1. Field of the Invention

The present invention relates to a hinge mechanism for use in a mobile terminal such as a slidably opening/closing type mobile phone or PDA, and a mobile terminal provided with the hinge mechanism.

### 2. Description of the related art

There has been conventionally proposed a sliding device for slidably opening/closing, in a vertical direction, a cover mounted on an operating unit of a mobile phone (refer to, for example, Japanese Patent Application Laid-Open No. 2004-253526). In such a sliding device, a cover is laid on a main body in such a manner as to freely slide in a vertical direction, in which one end of a spring is connected to the cover whereas the other end of the spring is connected to the main body. The spring is arranged such that a neutral position, at which both ends of the spring are aligned in a direction perpendicular to a slide direction, is located substantially at the middle between a fully opening position and a fully closed position. With this configuration, when the cover slides, the cover can be semi-automatically opened to the fully opening position or closed to the fully closed position beyond the neutral position.

However, the above-described sliding device merely can slidably open/close in one direction from the fully closed position to the fully opening position. Heretofore, there has been no sliding device capable of sliding both upward and downward from a middle position, which also is referred to as a fully closed position.

### SUMMARY OF THE INVENTION

In view of the above-described problems experienced by the related art, an object of the present invention is to provide a hinge device which can semi-automatically open/close a cover during a sliding motion in one direction from a middle position, and further, can allow a sliding motion in a reverse direction from the middle position, and a mobile terminal.

A hinge mechanism of the present invention having: a first plate disposed in a first casing and a second plate disposed in a second casing, the first casing and the second casing constituting a mobile terminal; a slide guide disposed in either one of the first plate and the second plate; a slide fitting portion disposed in the other of the first plate and the second plate, to be slidably moved along the slide guide; and an urging means connected to the first plate via a first connecting portion and connected to the second plate via a second connecting portion, includes: a cam disposed nearer one side in the sliding motion direction than the first connecting portion on the first plate; a displacement allowable guide which is disposed on the second plate and allows the second connecting portion to be displaced in a direction crossing the sliding motion direction; and an abutting portion disposed at the second connecting portion, to abut against the cam.

For example, one of the first casing and the second casing serves as a casing on a key side, on which input keys in the mobile terminal are arranged, whereas the other casing serves as a casing on a display side, on which a liquid crystal display is provided, and vice versa.

The first plate may be connected directly to the first connecting portion, by the use of an independent member (such as a fixing member or an arm member serving as a link mechanism), or by other appropriate methods.

The second plate may be connected directly to the second connecting portion, by the use of an independent member (such as a fixing member or an arm member serving as a link mechanism), or by other appropriate methods.

The abutting portion is formed of a member such as a roller or a bearing other than the urging means, or is formed by machining a part of the urging means into a circular or curved shape, that is, may be constituted of a portion abutting against the cam.

According to the present invention, the urging means can achieve the semi-automatically opening/closing operation by the effect of the sliding motion onto the other side at the position, at which the abutting portion abuts against the cam, and further, can achieve the sliding motion in the direction reverse to a direction of the semi-automatically opening/closing operation at the position, at which the abutting portion abuts against the cam.

According to an aspect of the present invention, the abutting portion may be located at a position, at which the abutting portion does not abut against other members during the sliding motion in separation from the cam.
As a consequence, it is possible to prevent any generation of a frictional force due to the abutment of the abutting portion against the other members during the semi-automatically opening/closing operation in which the abutting portion is separated from the cam, so as to achieve the smooth semi-automatically opening/closing operation.

According to another aspect of the present invention, the cam may be formed into the shape of a triangle projecting in a direction reverse to an urge direction by the urging means, and further, may be formed in a size such that the abutting portion abuts against the cam even in a state in which the abutting portion maximally slides so as to ride over the vertex of the triangle.

Consequently, the force of the abutting portion is required for riding over the triangle of the cam in addition to the force against the urging force of the urging means when the abutting portion is slidably moved in a direction, in which the abutting portion is returned from the state of the maximum sliding motion. As a result, the abutting portion can be stabilized in the state of the maximum sliding motion, and further, a play can be prevented in the state of the maximum sliding motion.

According to a further aspect of the present invention, an abutting surface of the cam, against which the abutting portion abuts during the sliding motion, may be formed into a linear shape.
As a consequence, it is possible to stabilize the position, at which the abutting portion stops in abutment against the cam, and further, to suppress a deviation of a stop position caused by variations in part precision during fabrication processes to the minimum.

According to a still further aspect of the present invention, the urging means may be constituted of a spring formed in flat cross section, in which a perpendicular thickness is reduced on a plate plane between the first plate and the second plate.
Consequently, it is possible to remarkably reduce the entire thickness of the hinge mechanism, and further, to obtain the sufficient urging force.

A mobile terminal of the present invention includes the hinge mechanism, the first casing, and the second casing.
As a result, when the stop position, at which the slidably moving abutting portion, for example, first abuts against the cam, is regarded as the middle position, it is possible to achieve the semi-automatically opening/closing operation in one direction at the middle position and the slidably opening/closing operation in the reverse direction.

According to the present invention, there can be provided the hinge device which can semi-automatically open/close the cover during a sliding motion in one direction from the middle position, and further, can allow the sliding motion in the reverse direction from the middle position, and the mobile terminal.

### BRIEF DESCRIPTION OF THE DRAWINGS

FIG. 1 shows an exploded perspective view of a mobile phone, as viewed from lower right in the front;
FIG. 2 shows an exploded perspective view of the mobile phone, as viewed from lower right in the back;
FIG. 3 shows a perspective view of a hinge device, as viewed from lower right in the front;
FIG. 4 shows a perspective view of the hinge device, as viewed from the back in a reverse state;
FIG. 5 shows a bottom view of the hinge device, as viewed from the bottom;
FIGS. 6A to 6C show front views explanatory of the hinge device in various states;
FIGS. 7D and 7E show front views explanatory of the hinge device in other various states;
FIGS. 8A, 8D and 8E show front views explanatory of operations of a roller and a cam;
FIGS. 9A to 9C show front views explanatory of the mobile phone in various states; and
FIGS. 10D and 10E show front views explanatory of the mobile phone in other various states.

### DETAILED DESCRIPTION OF THE PREFERRED EMBODIMENT

One preferred embodiment according to the present invention will be explained below in reference to the attached drawings.

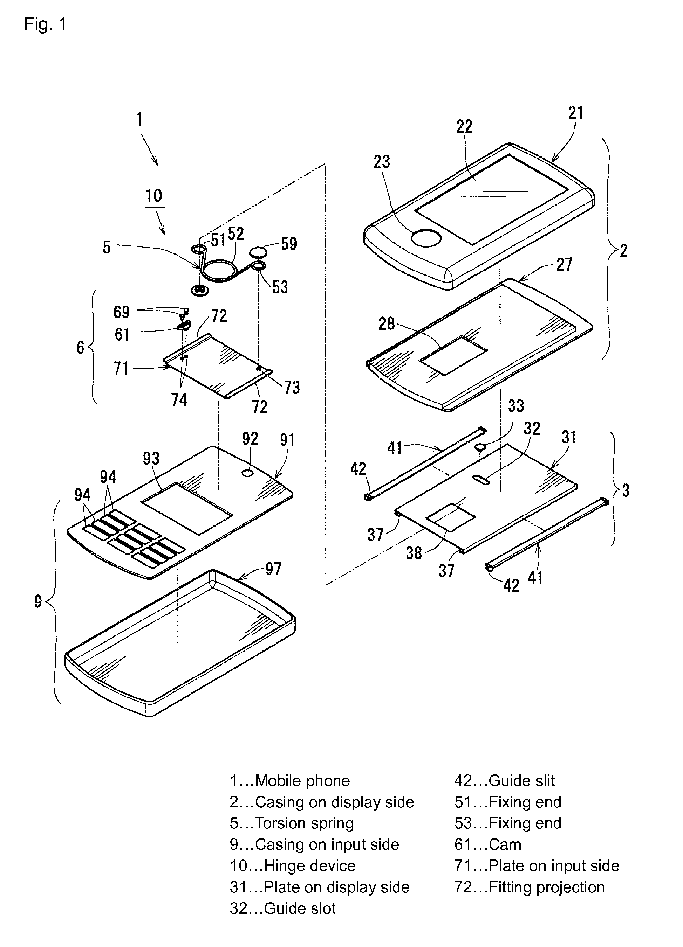

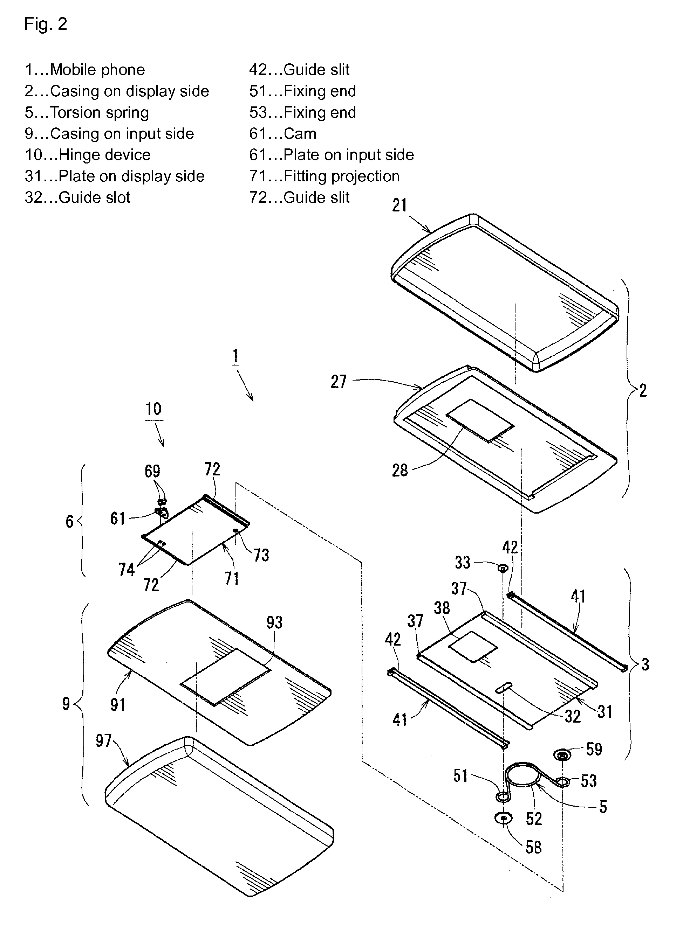

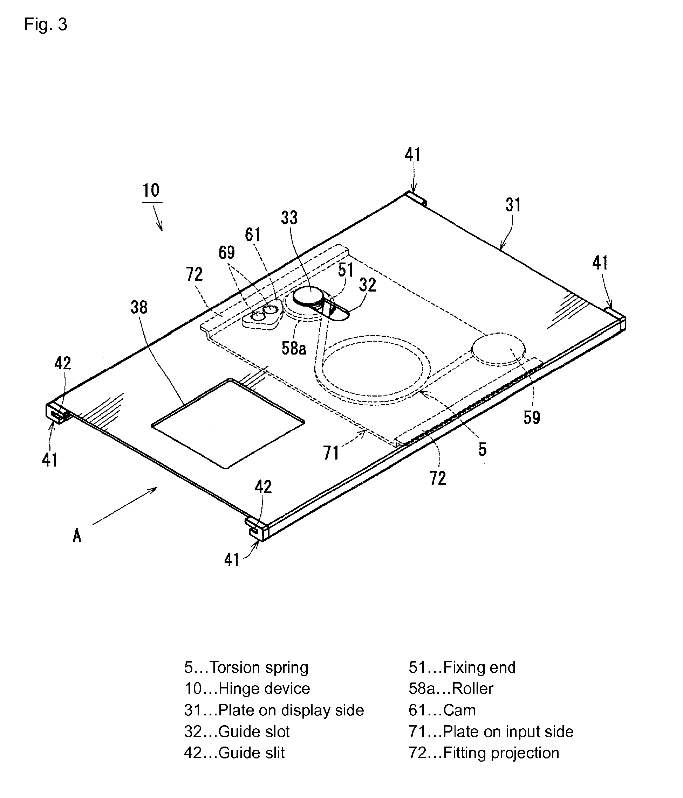

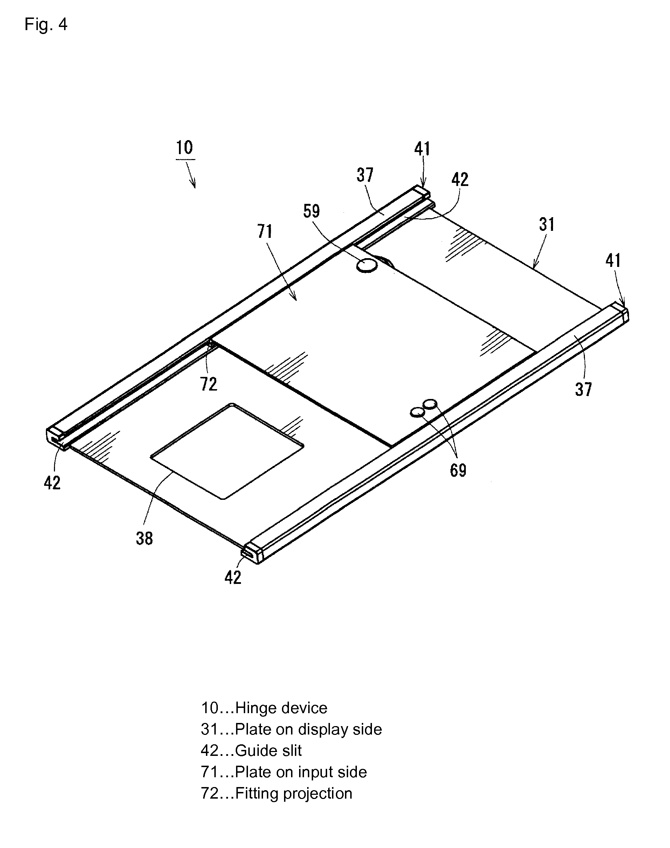

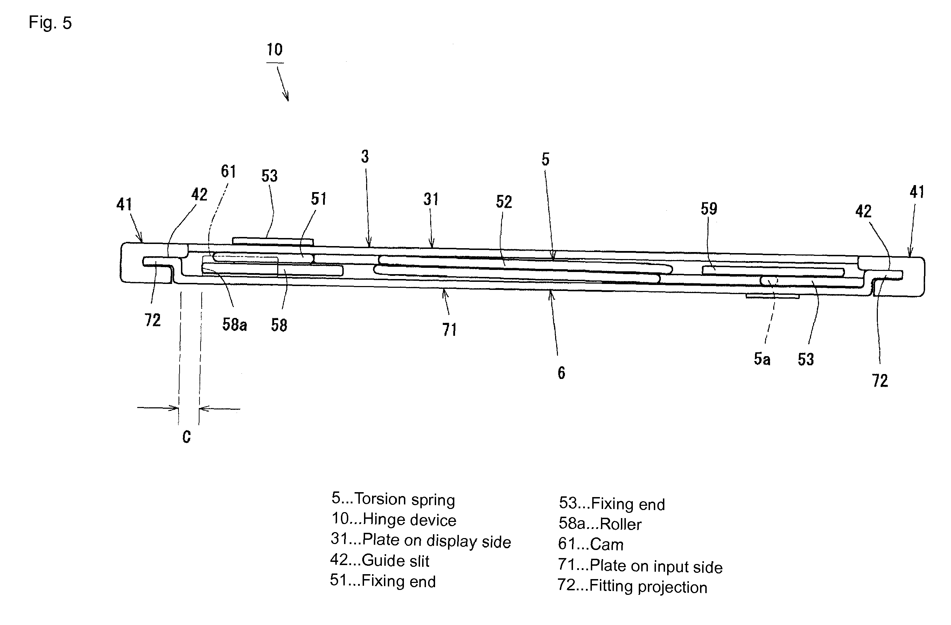

FIG. 1 shows an exploded perspective view of a mobile phone 1, as viewed from lower right in the front; FIG. 2 shows an exploded perspective view of a mobile phone 1, as viewed from lower right in the back; FIG. 3 shows a perspective view of a hinge device 10, as viewed from lower right in the front; FIG. 4 shows a perspective view of the hinge device 10, as viewed from the back in a reverse state; and FIG. 5 shows a bottom view of the hinge device 10, as viewed from the bottom (i.e., in a direction indicated by an arrow A in FIG. 3).

The mobile phone 1 is configured such that a casing 2 on a display side, on which a liquid crystal display 22 is disposed, and a casing 9 on an input side, on which input keys 94 are arranged, are connected via the hinge device 10.

In the casing 2 on the display side, electronic equipment packaged inside is covered with an obverse cover 21 formed into a substantially rectangular shape, as viewed from the front, and a back cover 27 for closing a back surface of the obverse cover 21. On the obverse cover 21 are disposed the liquid crystal display 22 and a function key 23. At a position slightly lower than the center of the back cover 27 is formed a hole 28 for a cable, through which a connecting cable for connecting the electronic equipment in the casing 2 on the display side to electronic equipment in the casing 9 on the input side passes.

The casing 9 on the input side covers the electronic equipment packaged inside with a reverse cover 97 formed into a substantially rectangular shape and in almost the same size as the obverse cover 21 and a front cover 91 for closing a front surface of the reverse cover 97. On the front cover 91 are provided a camera 92 at the upper portion thereof, a hole 93 for a cable, through which the connecting cable passes, at the center thereof, and the plurality of input keys 94 at the lower portion thereof.

The hinge device 10 is constituted of a unit 3 on the display side, secured to the casing 2 on the display side, a unit 6 on the input side, secured to the casing 9 on the input side, and a torsion spring 5 connected at one end thereof to the unit 3 on the display side whereas at the other end thereof to the unit 6 on the input side.

The unit 3 on the display side includes a plate 31 on the display side, a rivet 33 and slide guides 41.

The plate 31 on the display side is formed in a size next smaller than the casing 2 on the display side and into a substantially rectangular shape, as viewed from the front. Both of right and left pieces of the plate 31 on the display side are bent toward the back surface in a U shape in cross section, and thus, guide holders 37 are formed symmetrically in a lateral direction. To both of the guide holders 37 are disposed the slide guides 41, each having the U-shaped cross section and substantially the same length as the vertical length of the plate 31 on the display side, symmetrically in the lateral direction. As a consequence, guide slits 42 (see FIG. 2) disposed at surfaces of both of the slide guides 41, facing to each other, are arranged in parallel to each other in a horizontal direction.

In the vicinity of the center in the vertical direction of the plate 31 on the display side and on the left, that is, on a side of one of the guide slits 42 is formed a guide slot 32 long in a widthwise direction (i.e., in a direction perpendicular to the slit direction of the guide slit 42). Into the guide slot 32 is inserted the rivet 33 in such a manner as to freely slide in a widthwise direction. Another hole 38 for the cable, through which the connecting cable passes, is formed at the lower portion of the plate 31 on the display side.

The unit 6 on the input side includes a plate 71 on the input side and a cam 61.
The plate 71 on the input side is formed into a rectangle having a length in a vertical direction (i.e., a sliding motion direction) slightly smaller than the half of the plate 31 on the display side and a lateral width enough that the plate 71 on the input side is inserted into the guide slits 42 formed at both ends of the unit 3 on the display side. Fitting projections 72 to be fitted into the guide slits 42 are formed symmetrically in the lateral direction by stepwise bending once both of right and left pieces of the plate 71 on the input side in cross section, as shown in FIG. 4. Both of the right and left fitting projections 72 extend straight in the vertical direction in such a manner as to become parallel to each other. As a consequence, the right and left fitting projections 72 are fitted into the guide slits 42, such that the plate 71 on the input side is stably slidably moved straight in the vertical direction with respect to the plate 31 on the display side.

In the vicinity of the upper right end of the plate 71 on the input side is formed a fixing hole 73, into which a rivet 59 is inserted. A fixing end 53 of the torsion spring 5 is fixed to the fixing hole 73 via the rivet 59.

In the vicinity of the upper left end of the plate 71 on the input side are formed fixing holes 74 and 74 for securely fixing the cam 61. The cam 61 is securely fixed to the fixing holes 74 and 74 via rivets 69 and 69, to be thus prevented from being rotated or moved. The securely fixed cam 61 is arranged near one of the fitting projections 72 (the left fitting projection in the drawings), to be thus formed into a triangle projecting toward the other fitting projection 72 (the right fitting projection in the drawings).

The torsion spring 5 is of a type having a coil 52 at the center of a V shape and including fixing ends 51 and 53 at both ends thereof. The torsion spring 5 is configured such that a straight distance between the fixing ends 51 and 53 in a natural state becomes longer than a shortest straight distance between the fixing ends 51 and 53 due to the sliding motions of the plate 31 on the display side and the plate 71 on the input side. Consequently, the torsion spring 5 urges the fixing ends 51 and 53 in directions separate from each other all the time when the torsion spring 5 is incorporated in the hinge device 10.
The fixing end 51 is fixed to the guide hole 32 formed in the plate 31 on the display side via a rivet 58 and the rivet 33, to be thus freely moved in the widthwise direction. Incidentally, the fixing end 51 is urged outward in the widthwise direction, that is, toward the guide slit 42 near itself all the time by the urging force of the torsion spring 5. The rivet 58 for fixing the fixing end 51 has a roller 58a, as shown in FIG. 5. The roller 58a is configured in such a manner as not to abut against the fitting projection 72 at the plate 71 on the input side even if the roller 58a is located anywhere at the guide slot 32 (see FIG. 3).

As shown in FIG. 1, the fixing end 53 is fixed to the fixing hole 73 formed in the plate 71 on the input side via the rivet 59. At this time, the fixing end 53 is fixed in such a manner that the torsion spring 5 as a whole can be rotated on the fixing end 53.

The torsion spring 5 is constituted of a flat wire 5a in vertically pressed cross section (see FIG. 5). Therefore, the torsion spring 5 can be reduced in thickness more than a torsion spring constituted of a wire in circular cross section, and further, can secure a required resiliency.

As shown in FIG. 5, the principal parts in the hinge device 10 are arranged such that the torsion spring 5, the roller 58a and the cam 61 are sandwiched between the plate 31 on the display side and the plate 71 on the input side lengthwise superimposed one on another. Moreover, the plate 31 on the display side and the plate 71 on the input side in superimposition are arranged in height flush with each other, so that the roller 58a and the cam 61 abut against each other.

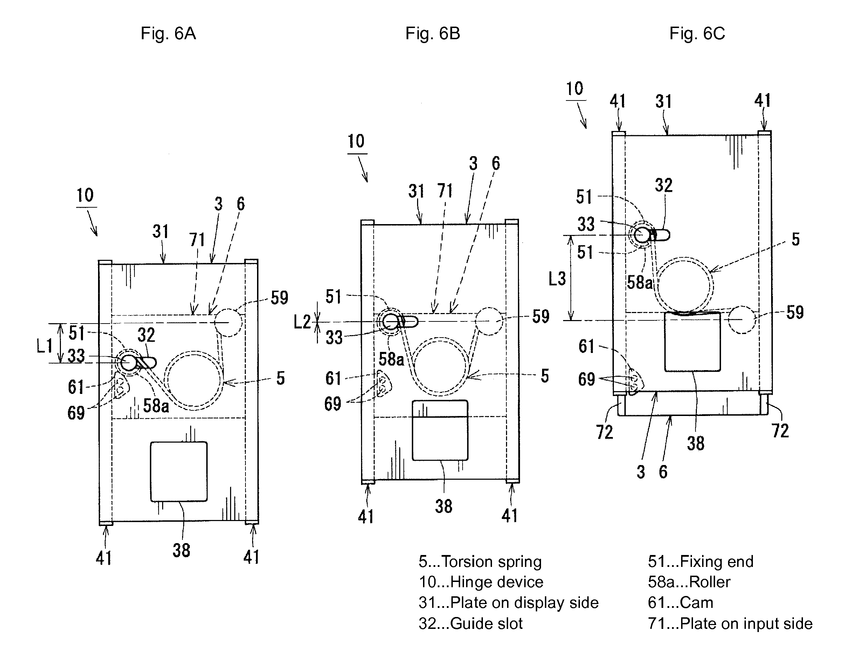

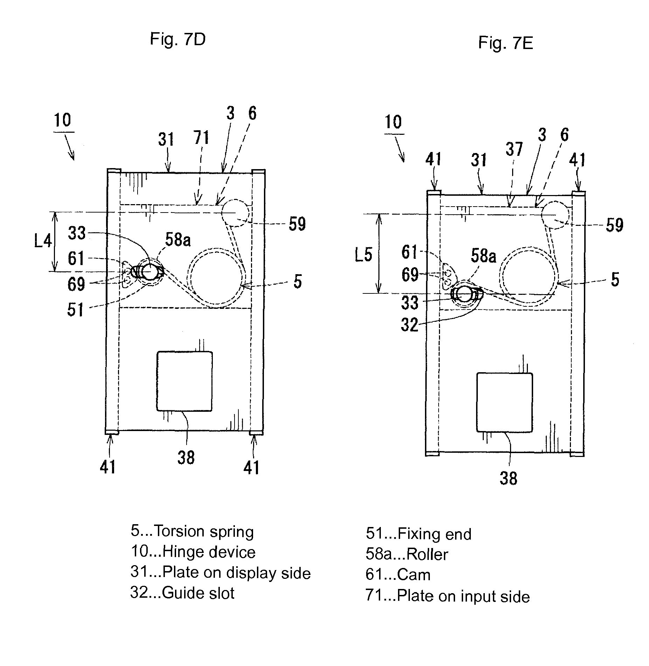

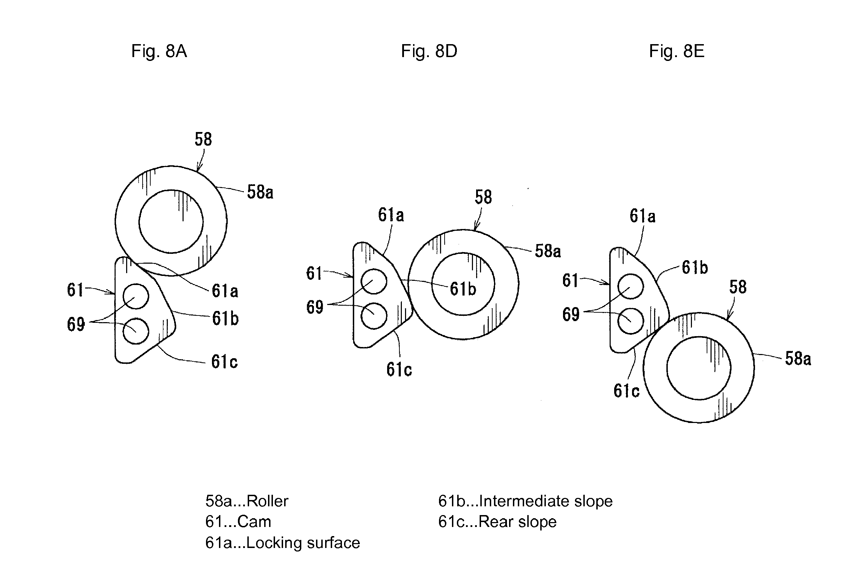

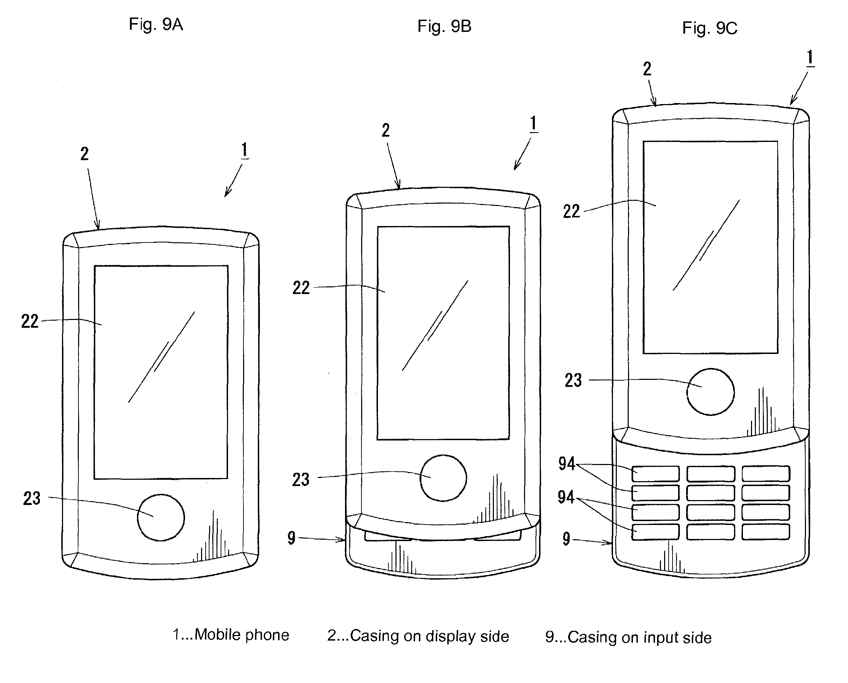

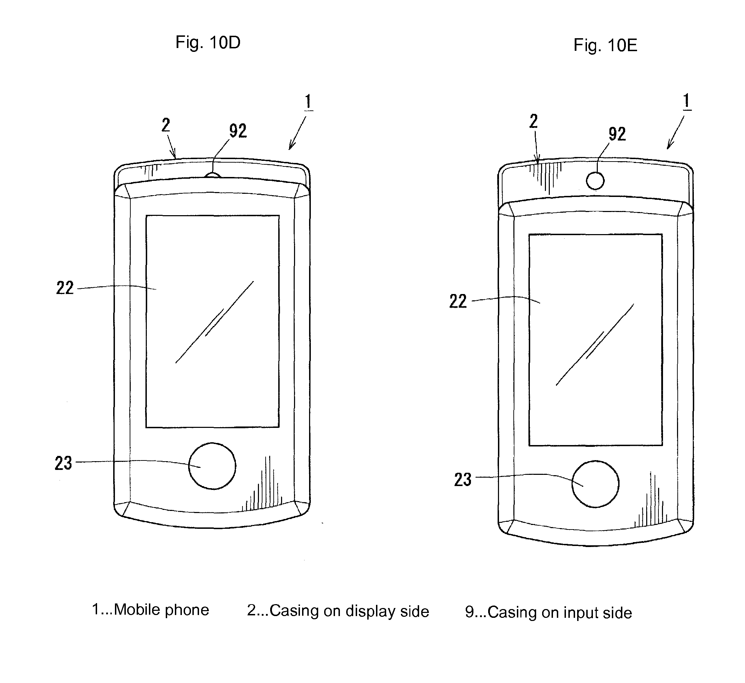

FIGS. 6A to 6C and FIGS. 7D and 7E show front views explanatory of the hinge device 10 in various states; FIGS. 8A, 8D and 8E show front views explanatory of operations of the roller 58a and the cam 61; and FIGS. 9A to 9C and FIGS. 10D and 10E show front views explanatory of the mobile phone 1 in various states.

First of all, in a closed state (i.e., an intermediate state), the casing 2 on the display side and the casing 9 on the input side are completely superimposed one on another in a stationary manner in the mobile phone 1, as shown in FIG. 9A. At this time, the roller 58a of the rivet 58 is locked in abutment against a locking surface 61 a of the cam 61, as shown in FIG. 8A. When the roller 58a of the rivet 58 is locked at the locking surface 61 a of the cam 61 in this manner, the centers of the rivets 33 and 58, via which the fixing end 51 of the torsion spring 5 is fixed, are located by a distance L1 under the center of the rivet 59, via which the fixing end 53 is fixed, as shown in FIG. 6A. Here, the torsion spring 5 is slightly bent. As a consequence, the rivets 33 and 58 are urged toward the lower left. Thus, the hinge device 10 and the mobile phone 1 can stably stay without any play.

In addition, the locking surface 61 a shown in FIG. 8A is formed into a straight slope inclined right downward in FIG. 8A. Thus, the rivets 33 and 58 can be locked at invariable positions irrespective of products. In other words, if the locking surface 61 a is formed into a curve, the rivets 33 and 58 are liable to be locked with deviations due to variations from the viewpoint of fabrication. However, the straight slope can prevent any deviation.

From the above-described closed state, when the casing 2 on the display side is slidably moved upward, as shown in FIG. 9B, the mobile phone 1 may be turned into an upward neutral state, as shown in FIG. 6A. In the upward neutral state, the centers of the rivets 33 and 58, via which the fixing end 51 of the torsion spring 5 is fixed, vertically accord with the center of the rivet 59, via which the fixing end 53 is fixed, and therefore, a vertical distance L2 becomes zero. If a user moves his or her hand off the mobile phone 1 in the upward neutral state, the casing 2 on the display side and the casing 9 on the input side stay in balance. From this state, after the casing 2 on the display side slides upward even a little, the casing 2 on the display side automatically slides to an upward fully opened state, as shown in FIGS. 6C and 9C, by the urging force of the torsion spring 5. Here, if the casing 2 on the display side slides downward even a little from the upward neutral state, the casing 2 on the display side automatically slides to the fully closed state, as shown in FIGS. 6A and 9A.

In the upward fully opened state shown in FIGS. 6C and 9C, the centers of the rivets 33 and 58, via which the fixing end 51 of the torsion spring 5 is fixed, are located by a distance L3 above the center of the rivet 59, via which the fixing end 53 is fixed. Here, locking portions for locking the sliding motion in abutment against each other in the upward fully opened state should be preferably disposed in the unit 3 on the display side and the unit 6 on the input side, respectively, although omitted in the drawings. Such locking portions may be disposed not in the unit 3 on the display side and the unit 6 on the input side but the casing 2 on the display side and the casing 9 on the input side, respectively. The locking portion can lock the sliding motion with the application of the urging force by the torsion spring 5 in the upward fully opened state, and thus, the casing 2 on the display side and the casing 9 on the input side can stably stay without any play in the upward fully opened state.

In the state variations explained hereto, as shown in FIGS. 6A to 6C and 9A to 9C, a semi-automatically opening/closing operation can be achieved by utilizing the urging force by the torsion spring 5. In the upward fully opened state shown in FIGS. 6C and 9C, all of the input keys 94 appear in the casing 9 on the input side, as shown in FIG. 9C. In this state, the user operates the input keys 94, so as to make a call, look at an address book, send an e-mail, browse the Internet and the like in the mobile phone 1.

When the user slidably moves the casing 2 on the display side downward from the state shown in FIGS. 6A and 9A, as shown in FIG. 10D, the roller 58a rides over the locking surface 61 a of the cam 61, to thus abut against an intermediate slope 61 b, as shown in FIG. 8D. At this time, the rivets 33 and 58 are moved rightward in the guide slot 32 against the urging force by the torsion spring 5, as shown in FIG. 7D. Also at this time, the centers of the rivets 33 and 58, via which the fixing end 51 of the torsion spring 5 is fixed, are located by a distance L4 under the center of the rivet 59, via which the fixing end 53 is fixed. Here, the distance L4 is longer than the above-described distance L1 (see FIG. 6A).

When the user slidably moves the casing 2 on the display side further downward, the roller 58a rides over the intermediate slope 61 b, to thus abut against a rear slope 61 c, as shown in FIGS. 7E and 8E. Here, the rear slope 61 c is inclined right downward, although the locking surface 61 a and the intermediate slope 61 b are inclined right upward. Therefore, the roller 58a is to be slidably moved downward without stopping by the urging force by the torsion spring 5. However, the locking portions, not shown, for locking the sliding motion in this state are disposed in the unit 3 on the display side and the unit 6 on the input side, so that the roller 58a can be locked in such a manner as not to be slidably moved further. As a consequence, the casing 2 on the display side and the casing 9 on the input side can stably stay without any play since the sliding motion can be locked with the application of the urging force by the torsion spring 5.

At this time, the centers of the rivets 33 and 58, via which the fixing end 51 of the torsion spring 5 is fixed, are located by a distance L5 under the center of the rivet 5, via which the fixing end 53 is fixed. Here, the distance L5 is longer than the above-described distance L4 (see FIG. 7D).
The locking portions may be disposed not in the unit 3 on the display side and the unit 6 on the input side but the casing 2 on the display side and the casing 9 on the input side, respectively.

In this manner, when the casing 2 on the display side is slidably moved to a downward fully opened state, the camera 92 appears, as shown in FIG. 10E. Thus, a picture can be picked up by the use of the camera 92. In other words, it is possible to provide the user with functions different from those in the upward fully opened state.

With the above-described configuration and operation, the mobile phone 1 can be turned from the fully closed state shown in FIGS. 6A and 9A to both of the upward fully opened state shown in FIGS. 6C and 9C and the downward fully opened state shown in FIGS. 7E and 10E.

When the casing 2 on the display side is slidably moved upward, the casing 2 on the display side is slidably moved up to the neutral position shown in FIGS. 6B and 9B by the hand. Thereafter, the semi-automatically opening/closing operation can be achieved such that the casing 2 on the display side is automatically slidably moved by the urging force by the torsion spring 5.

Since the roller 58a is configured in such a manner as not to be brought into contact with the fitting projecting 72, no frictional force is generated between the roller 58a and the fitting projecting 72 during the sliding motion at least from the fully closed state shown in FIGS. 6A and 9A to the upward fully opened state shown in FIGS. 6C and 9C. As a consequence, it is possible to achieve the smoothly sliding motion from the fully closed state shown in FIGS. 6A and 9A to the upward fully opened state shown in FIGS. 6C and 9C, and further, to prevent any abrasion of the parts.

Moreover, since the cam 61 is located at the position, at which the roller 58a abuts against the cam 61 during the sliding motion, the urging force by the single torsion spring 5 can act on both of the upward slide opening/closing operation and the downward slide opening/closing operation. Consequently, the simple structure can achieve the upward and downward slide opening/closing operations from the fully closed state. In addition, the casing 2 on the display side is stopped with the application of the urging force by the torsion spring 5 at the stationary position in any of the fully closed state, the upward fully opened state and the downward fully opened state. Thus, the casing 2 on the display side can stably stay without any play in any of the stationary states.

Furthermore, the upward slide opening/closing operation can achieve the semi-automatically opening/closing operation by utilizing only the urging force by the single torsion spring 5: in contrast, the downward slide opening/closing operation can achieve the semi-automatically opening/closing operation by utilizing the urging force by the single torsion spring 5 and the cam 61. Therefore, the upward sliding motion and the downward sliding motion can vary the distance of the sliding motion, the force required for the sliding operation or the operational feeling of the sliding operation. Thus, even if the user opens or closes the mobile phone 1 without any glance, he or she can recognize only by the operational feeling as to whether the casing is slidably moved upward or downward. In particular, since the upward sliding motion can be achieved by a force smaller than that required for the downward sliding motion in the present preferred embodiment, the upward sliding motion can be readily achieved in speedily opening or closing upon reception of a call or an e-mail.

Additionally, the thin hinge device 10 as a whole can be provided for the mobile phone, for which thinness has been required in recent years.
Incidentally, although the cam 61 is formed into the one-step triangle in the above-described preferred embodiment, it may be formed into a multi-step triangle such as a two-step triangle or a three-step triangle. In this case, the number of slide stop positions can be increased.

Alternatively, although the cam 61 is formed independently of the plate 71 on the input side, a cam may be formed integrally with the plate 71 on the input side by machining the plate 71 on the input side. In this case, the number of component parts can be reduced, thus producing the same functions and effects as those produced in the above-described preferred embodiment.

In comparison of the subject matter of the present invention with the constituents in the above-described preferred embodiment, a mobile terminal according to the present invention corresponds to the mobile phone 1 in the preferred embodiment: in the same manner hereinafter, a second casing, to the casing 2 on the display side; an urging device and a spring, to the torsion spring 5; a first casing, to the casing 9 on the input side; a hinge mechanism, to the hinge device 10; a second plate, to the plate 31 on the display side; a displacement allowable guide, to the guide slot 32; a slide guide, to the guide slit 42; a second connecting portion, to the fixing end 51; a first connecting portion, to the fixing end 53; an abutting portion, to the roller 58a; an abutting surface of the cam, to the locking surface 61 a; a vertex of a triangle, to a continuous portion between the intermediate slope 61 b and the rear slope 61 c; a first plate, to the plate 71 on the input side; and a slide fitting portion and other members, to the fitting projection 72. In addition, an urge direction by the urging means designates the lateral direction and a slantwise lateral direction in FIGS. 6 to 10; a sliding motion direction denotes the vertical direction in FIGS. 6 to 10; one side in the sliding motion direction expresses the lower side in FIGS. 6 to 10; and a direction crossing the sliding motion direction indicates the lateral direction in FIGS. 6 to 10. However, the present invention is not limited to only the configuration in the above-described preferred embodiment, and therefore, it can be variously modified and altered.

## Claims

1. A hinge mechanism including: a first plate disposed in a first casing and a second plate disposed in a second casing, the first casing and the second casing constituting a mobile terminal; a slide guide disposed in either one of the first plate and the second plate; a slide fitting portion disposed in the other of the first plate and the second plate, to be slidably moved along the slide guide; and an urging device connected to the first plate via a first connecting portion and connected to the second plate via a second connecting portion, the hinge mechanism comprising:
a cam disposed nearer one side in the sliding motion direction than the first connecting portion on the first plate;
a displacement allowable guide which is disposed on the second plate and allows the second connecting portion to be displaced in a direction crossing the sliding motion direction; and
an abutting portion disposed at the second connecting portion, to abut against the cam.

2. The hinge mechanism according to claim 1, wherein the abutting portion is located at a position, at which the abutting portion does not abut against other members during the sliding motion in separation from the cam.

3. The hinge mechanism according to claim 1 or claim 2, wherein the cam is formed into the shape of a triangle projecting in a direction reverse to the urge direction by the urging device, and further, is formed in a size such that the abutting portion abuts against the cam even in a state in which the abutting portion maximally slides so as to ride over the vertex of the triangle.

4. The hinge mechanism according to any one of claims 1 to 3, wherein an abutting surface of the cam, against which the abutting portion abuts during the sliding motion, is formed into a linear shape.

5. The hinge mechanism according to any one of claims 1 to 4, wherein the urging device is constituted of a spring formed in flat cross section, in which a perpendicular thickness is reduced on a plate plane between the first plate and the second plate.

6. A mobile terminal comprising:
the hinge mechanism according to any one of claims 1 to 5;
the first casing; and
the second casing.
